# EUROPÄISCHE PATENTSCHRIFT

(11) **EP 2 872 545 B1**
(45) Veröffentlichungstag und Bekanntmachung des Hinweises auf die Patenterteilung: **07.09.2016**
(21) Anmeldenummer: 13734079.0
(22) Anmeldetag: 04.07.2013
(51) Int. Cl.: C08G 77/04, C08G 77/08, C08G 77/10, C08G 77/50

(54) **VERFAHREN ZUR HERSTELLUNG VON ORGANOPOLYSILOXANEN**
PROCESS FOR PRODUCING ORGANOPOLYSILOXANES
PROCEDE DE FABRICATION D'ORGANOPOLYSILOXANES

(30) Priorität: 10.07.2012 DE 102012212007
(43) Veröffentlichungstag der Anmeldung: 20.05.2015
(73) Patentinhaber: Wacker Chemie AG, 81737 München (DE)
(72) Erfinder: POPP, Alfred, 82008 Unterhaching (DE)
(74) Vertreter: Deffner-Lehner, Maria
(86) Internationale Anmeldenummer: PCT/EP2013/064154
(87) Internationale Veröffentlichungsnummer: WO 2014/009252

(56) Entgegenhaltungen:
- EP-A2- 0 484 959
- WO-A2-2007/023084
- DE-A1- 19 846 397

## Beschreibung

Die Erfindung betrifft ein Verfahren zur Herstellung von Organopolysiloxanen.

WO 2007/023084 A2 und EP 2072 591 A1 beschreiben Organopolysiloxanverbindungen, die pro Molekül mindestens eine Struktureinheit der allgemeinen Formel 0_{3-a/2}RₐSi-Y- (SiRₐO_{3-a/2})_{b}, wie die Struktureinheit O_{2/2}MeSi-CH₂CH₂-SiMeO_{2/2}, enthalten. Als Herstellverfahren wird die Cohydrolyse von Verbindungen der allgemeinen Formeln X₃₋ₐRₐSi-Y- (SiRₐX₃₋ₐ)_{b} und R¹_{c}SiX_{4-c}, wie die Cohydrolyse von 1,2-Bis(methyldichlorsilyl)ethan mit Vinyldimethylchlorsilan, beschrieben.

Dieses Verfahren hat, sowohl wenn man es kontinuierlich als auch diskontinuierlich durchführt, wesentliche Nachteile. Durch die Cohydrolyse mit Verbindungen der Formel R¹_{c}SiX_{4-c} entstehen in erheblichen Mengen unerwünschte Nebenprodukte, die ausschließlich das Strukturmotiv R¹_{c}SiO_{4-c} enthalten und nicht das gewünschte Strukturmotiv O_{3-a/2}RₐSi-Y-(SiRₐO_{3-a/2})_{b}. Darüber hinaus entstehen auch niedermolekulare Verbindungen, die das gewünschte Strukturmotiv O_{3-a/2}RₐSi-Y-(SiRₐO_{3-a/2})_{b} zwar enthalten, aber aufgrund ihrer unerwünschten Eigenschaften (z. B. niedriger Siedepunkt) abgetrennt werden müssen, wie es im Beispiel 1 der WO 2007/023084 A2 beschrieben ist. Dies führt zum einen zu einem erhöhten Aufwand für die Abtrennung und zum anderen zu einer verminderten Ausbeute des Zielproduktes und damit zu einer niedrigen Raum-Zeit-Ausbeute.

Wie aus DE 2630744 A1 hervorgeht, lassen sich Organosiloxane durch Umsetzung mit Chlorsilanen in Anwesenheit von Aktivkohle umsetzen. Nachteilig bei diesem Verfahren sind die hohen Temperaturen, die sich im Siedebereich der Komponenten bewegen, sowie die hohen Zusatzmengen anorganischer Säuren, wie aus den Beispielen hervorgeht.

Gegenstand der Erfindung ist ein Verfahren zur Herstellung von Organopolysiloxanen, die pro Molekül mindestens eine Struktureinheit der allgemeinen Formeln

O_{3-a/2}RₐSi-Y-(SiRₐO_{3-a/2})_{b} (I)

und

R¹_{c}SiO_{4-c} (II)

enthalten, dadurch gekennzeichnet, dass
(a) in einem ersten Schritt
   eine Mischung aus
   Verbindungen der allgemeinen Formeln

   X₃₋ₐRₐSi-Y-(SiRₐX₃₋ₐ)_{b} (III)

   und

   R¹_{c}SiX_{4-c} (IV)

   und Siloxanen, die pro Molekül mindestens eine Struktureinheit ausgewählt aus der Gruppe enthaltend die allgemeinen Formeln

   X_{3-a/2}RₐSi-Y-(SiRₐO_{3-a/2})_{b} (V)

   und

   R¹_{c}SiO_{4-c} (VI)

   und deren Mischungen enthalten und die eine Molmasse (M_{w} Gewichtsmittel) von 100 bis 950 g/mol aufweisen,
   mit einem Katalysator, vorzugsweise mit einem Katalysator mit einer im Wesentlichen sauren Oberfläche, in Kontakt gebracht wird und
(b) in einem zweiten Schritt
   die daraus erhaltene Mischung mit Wasser oder einer wässrigen Säure umgesetzt wird,
   wobei Organopolysiloxane erhalten werden, die pro Molekül mindestens eine Struktureinheit der Formeln (I) und (II) enthalten und eine Molmasse (M_{w} Gewichtsmittel) von 1000 bis 100 000 g/mol aufweisen,
   wobei
   R gleich oder verschieden sein kann und einen einwertigen SiC-gebundenen organischen Rest mit 1 bis 30 C-Atomen, der ein oder mehrere N und/oder O-Atome enthalten kann, bedeutet,
   R¹ gleich oder verschieden sein kann und einen einwertigen SiC gebundenen organischen Rest mit 1 bis 30 C-Atomen, der ein oder mehrere N und/oder O-Atome enthalten kann, bedeutet,
   Y einen zwei- bis zwölfwertigen organischen Rest mit 1 bis 30 C-Atomen, der ein oder mehrere O-Atome enthalten kann, bedeutet,
   X eine hydrolysierbare Gruppe bedeutet,
   a 0 oder 1 ist,
   b eine ganze Zahl von 1 bis 11 ist und
   c 0, 1, 2 oder 3 ist,
   mit der Maßgabe, dass als Siloxane, die pro Molekül mindestens eine Struktureinheit ausgewählt aus der Gruppe enthaltend die allgemeinen Formeln (V) und (VI) und deren Mischungen enthalten, Nebenprodukte eingesetzt werden, die neben den ,Organopolysiloxanen mit den Struktureinheiten (I) und (II) entstehen, von diesen abgetrennt werden und in das Verfahren rückgeführt werden.

Überraschend wurde gefunden, dass niedermolekulare Siloxane, die pro Molekül mindestens eine Struktureinheit der Formel (V). oder (VI) enthalten, wie sie beispielsweise bei der in WO 2007/023084 A2 beschriebenen Abtrennung anfallen, in Anwesenheit eines Katalysators wieder mit Verbindungen der allgemeinen Formeln (III) und (IV) reagieren und nach anschließender Hydrolyse wieder Organopolysiloxane, die pro Molekül mindestens eine Struktureinheit der allgemeinen Formel (I) und (II) enthalten, erhalten werden.

Beispiele für R sind Kohlenwasserstoffreste, wie gesättigte oder ungesättigte Kohlenwasserstoffreste, die aromatische oder aliphatische Doppelbindungen enthalten können. Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und der tert.-Pentylrest, Hexylreste, wie der n-Hexylrest, Heptylreste, wie der n-Heptylrest, Octylreste, wie der n-Octylrest und iso-Octylreste, wie der 2,2,4- Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest; Cycloalkylreste, wie der Cyclopentyl-, Cyclohexyl- und 4-Ethylcyclohexylrest, Cycloheptylreste, Norbornylreste und Methylcyclohexylreste; Arylreste, wie der Phenyl-, Biphenyl-, Naphthyl- und Anthryl- und Phenanthrylrest; Alkarylreste, wie o-, m-, p-Tolylreste, Xylylreste und Ethylphenylreste; Aralkylreste, wie der Benzylrest; Alkenylreste, wie der 7-Octenyl-, 5-Hexenyl-, 3-Butenyl-, Allyl- und der Vinylrest sowie der alpha- und der beta-Phenylethylrest.
Die Kohlenwasserstoffreste R können Ether- oder Polyethergruppen, Amin- oder Polyamingruppen, wie primäre, sekundäre oder tertiäre Aminogruppen enthalten.

Vorzugsweise ist R ein einwertiger Kohlenwasserstoffrest mit 1 bis 18 Kohlenstoffatomen. Bevorzugt ist R ein Methyl-, Ethyl-oder Phenylrest, wobei der Methylrest besonders bevorzugt ist.

Beispiele für Reste R gelten auch für Reste R¹. Vorzugsweise ist R¹ ein einwertiger Kohlenwasserstoffrest mit 1 bis 18 Kohlenstoffatomen. Bevorzugt ist R eine Methyl-, Ethyl-, Phenyl-, Allyl- oder eine Vinylgruppe, wobei die Methyl- und die Vinylgruppe besonders bevorzugt sind.
a ist vorzugsweise 1.
b ist vorzugsweise 1.
c ist vorzugsweise 2 oder 3.

Beispiele für Einheiten der Formel (II) sind Einheiten der Formel R¹₃SiO_{1/2}, wie die Vinyldimethylsiloxaneinheit oder die Trimethylsiloxaneinheit, und Einheiten der Formel R¹₂SiO, wie die Dimethylsiloxaneinheit oder die Vinylmethylsiloxaneinheit. Das molare Verhältnis der Strukturelemente (II) zu (I) beträgt mindestens 1 und vorzugsweise mindestens 2.

Bevorzugt ist der Quotient aus Anzahl der C-Atome in Y und Wertigkeit von Y maximal 10, vorzugsweise maximal 5 und besonders bevorzugt maximal 3.

Y ist vorzugsweise eine verbindende organische Einheit mit 1 bis 24 C-Atomen zwischen zwei bis zwölf Siloxanyleinheiten (Si-Atomen).
Bevorzugt ist Y zwei-, drei- oder vierwertig, besonders bevorzugt ist Y zweiwertig.

Vorzugsweise ist Y ein zweiwertiger, dreiwertiger oder vierwertiger Kohlenwasserstoffrest mit 1 bis 24 C-Atomen, bevorzugt 2 bis 12 C-Atomen. Bevorzugt ist Y ein zweiwertiger Kohlenwasserstoffrest mit 2 bis 12 C-Atomen.

Beispiele für Y sind die Methylen-, die Methingruppe oder der vierwertige Kohlenstoff, die 1,1-Ethandiyl- und die 1,2-Ethandiylgruppe, die 1,4-Butandiyl- und die 1,3-Butandiylgruppe.
Enthält Y mindestens 2 C-Atome, kann dieser Rest auch ungesättigt sein. Beispiele hierfür sind die -CH=CH-Gruppe (cis oder trans) und die >C=CH₂-Gruppe sowie die -C=C-Gruppe. Besonders bevorzugt ist Y ein Kohlenwasserstoffrest mit 2 C-Atomen. Beispiele für besonders bevorzugte Reste sind -CH₂CH₂-, -CH(CH₃)-, -CH=CH-, -C(=CH₂)- und -C=C-.

Ein Beispiel für eine Verbindung der Formel (III) ist 1,2-Bis(methyldichlorsilyl)ethan, das über eine Hydrosilylierungsreaktion hergestellt wird durch Addition von Hydrogenmethyldichlorsilan an Vinylmethyldichlorsilan. Bevorzugt ist X ein Halogen-, Säure- oder Alkoxygruppe; besonders bevorzugt ist X eine Chlor-, Acetat-, Formiat-, Methoxy- oder Ethoxygruppe.

Das Molgewicht der eingesetzten Verbindungen der allgemeinen Formeln (V) und (VI) ist dabei naturgemäß kleiner als das des hergestellten Organopolysiloxans, das pro Molekül mindestens eine Struktureinheit der allgemeinen Formeln (I) und (II) enthält.

Bevorzugt ist das Molgewicht der eingesetzten Verbindungen der allgemeinen Formeln (V) und (VI) 160 bis 800 g/mol (Mw Gewichtsmittel).

Bevorzugt ist das Molgewicht der hergestellten Organopolysiloxane, die pro Molekül mindestens eine Struktureinheit der allgemeinen Formeln (I) und (II) enthalten, 1500 bis 10000 g/mol (Mw Gewichtsmittel).

Das erfindungsgemäße Verfahren kann sowohl kontinuierlich als auch diskontinuierlich durchgeführt werden.
Bevorzugt ist eine kontinuierliche Durchführung.

Die Mischung der Komponenten III und IV und der Siloxane, die die Struktureinheiten V und/oder VI enthalten, kann durch alle dem Fachmann bekannte Verfahren durchgeführt werden. Als Beispiel seien Mischrührwerke für eine diskontinuierliche Betriebsweise und statische Mischer für eine kontinuierliche Betriebsweise genannt.

Bei den Siloxanen, die die Struktureinheiten V und/oder VI enthalten, handelt es sich um niedermolekulare Nebenprodukte, die neben den Organopolysiloxanen mit den Struktureinheiten (I) und (II) entstehen, von diesen, vorzugsweise thermisch, wie über Destillation, abgetrennt werden und in das Verfahren rückgeführt werden.

Vorzugsweise wird als Siloxan mit der Struktureinheit (VI) ein Siloxan der Formel R¹₃SiOSiR¹₃ (wobei R¹ die oben dafür angegebene Bedeutung hat) eingesetzt, wobei 1,3-Divinyl-1,1,3,3-tetramethyldisiloxan bevorzugt ist.

Das molare Verhältnis der Komponenten III und IV bzw. der Struktureinheiten V und VI in der eingesetzten Mischung kann durch den Fachmann an die gewünschten Eigenschaften des Endprodukts angepasst werden.
Der molare Anteil w der Komponente III an der Mischung kann dabei aus dem Bereich 0% < w ≤ 50%, bevorzugt aus dem Bereich 1% ≤w ≤ 20% gewählt werden.
Der molare Anteil x der Komponente IV an der Mischung kann dabei aus dem Bereich 1% ≤ x ≤ 90%, bevorzugt aus dem Bereich 20% ≤ x ≤ 60% gewählt werden.

Der molare Anteil y der Struktureinheit V an der Mischung kann dabei aus dem Bereich 0% ≤ y ≤ 50%, bevorzugt aus dem Bereich 1% ≤ y < 20% gewählt werden.
Der molare Anteil z der Struktureinheit VI an der Mischung kann dabei aus dem Bereich 1% ≤ z ≤ 90%, bevorzugt aus dem Bereich 20% ≤ z ≤ 60% gewählt werden.
Für die molare Anteile gilt: w + y > 0.
Die molaren Anteile w, x, y und z werden dabei so gewählt, dass die Summe w+x+y+z gleich 100% ist.
Das in Kontakt bringen mit einem Katalysator im ersten Verfahrensschritt (a) kann durch jede dem Fachmann bekannte Art erfolgen. Dies kann sowohl diskontinuierlich als auch kontinuierlich erfolgen. Das Gemisch aus den Komponenten III und IV und den Siloxanen mit den Struktureinheiten V und/oder VI kann zusammen mit dem Katalysator gerührt oder geschüttelt werden, um eine besonders gute Verteilung der Bestandteile eines solchen Gemisches zu gewährleisten.
Eine besonders bevorzugte Ausführungsform des erfindungsgemäßen Verfahrens ist das kontinuierliche in Kontakt bringen durch Durchleiten der Mischung durch einen mit dem Katalysator gefüllten Behälter (vorzugsweise eine mit dem Katalysator gefüllte Reaktionskolonne).

Der Katalysator kann beispielsweise ausgewählt werden aus der Gruppe enthaltend Aktivkohle, Aktivkoks, Silikate, Alumosilikate, Heteropolysäuren, sulfatiertes Zirconiumoxid und Polysulfonsäuren, ist aber nicht auf diese Stoffklassen beschränkt. Bevorzugt sind dabei Aktivkohle, Alumosilikate vom Zeolithtyp und Schichtsilikate vom Tonsil-Typ. Besonders bevorzugt ist Aktivkohle.

Bei der Aktivkohle handelt es sich dabei um ein industriell hergestelltes, problemlos zu handhabendes kohlenstoffhaltiges Produkt mit einer porösen Struktur und einer großen inneren Oberfläche. Das Porenvolumen ist vorzugsweise 0,17 bis 5 ml/g, bevorzugt 0,2 bis 3 ml/g, die innere Oberfläche vorzugsweise 300 bis 3000 m²/g, bevorzugt 400 bis 2000 m²/g, die Porenweite erstreckt sich vorzugsweise von 0,3 bis 4000 nm, bevorzugt 0,4 bis 200 nm.
Zur Anwendung stehen Pulverkohle (Kornanteil unter 0,18 mm größer als 90%), Kornkohle (Kornanteil über 0,18 mm größer als 90% ist) und Formkohle (Aktivkohle im Form von Zylindern mit identischem Durchmesser und unterschiedlicher Länge) zur Verfügung. Die Aktivierung der Aktivkohle kann sowohl mit Wasserdampf als auch chemisch (z. B. Zinkchlorid oder Phosphorsäure) erfolgen.

Die Menge der als Katalysator verwendeten Aktivkohle beträgt vorzugsweise 0,001 bis 30 Gewichtsprozent, insbesondere 0,01 bis 1 Gewichtsprozent, jeweils bezogen auf das Gesamtgewicht der umzusetzenden Mischung aus den Komponenten III und IV und den Siloxanen mit den Struktureinheiten V und/oder VI.

Falls erwünscht, kann das erfindungsgemäße Verfahren auch in Gegenwart eines gegenüber den Reaktionsteilnehmern inerten Lösungsmittels durchgeführt werden. Beispiele für solche Lösungsmittel sind bei Raumtemperatur (1013 mbar) flüssige Kohlenwasser- und Halogenkohlenwasserstoffe, wie Benzol, Toluol, Xylol, Methylenchlorid, Petrolether. Vorzugsweise wird kein zusätzliches Lösungsmittel verwendet.

Der erste Schritt des erfindungsgemäßen Verfahrens wird vorzugsweise beim Druck p der umgebenden Atmosphäre, also bei p = 1013 mbar durchgeführt. Falls erwünscht oder erforderlich, kann das erfindungsgemäße Verfahren jedoch auch bei höheren Drücken, z. B. 1013 mbar ≤ p ≤ 5000 mbar, was z. B. schon durch den Druckaufbau in einer Reaktionskolonne der Fall sein kann, oder bei niedrigeren Drücken, z. B. 0,1 mbar ≤ p ≤ 1013 mbar, was zur Einhaltung einer verhältnismäßig niedrigen Temperatur erwünscht sein kann, durchgeführt werden.

Vorzugsweise wird der erste Schritt des erfindungsgemäßen Verfahrens bei Temperaturen von 20 bis 200°C, bevorzugt 40 bis 160°C, besonders bevorzugt 50 bis 120°C, durchgeführt.

Die Kontaktdauer T im ersten Verfahrensschritt kann dabei aus einem Bereich von 1 Sekunden T ≤ 24 h gewählt werden. Vorzugsweise liegt die Kontaktdauer T in einem Bereich von 10 Sekunden ≤ T ≤ 120 Minuten, besonders bevorzugt in einem Bereich von 60 Sekunden ≤ T ≤ 60 Minuten.

Falls erwünscht oder erforderlich, kann zur Umsetzungen eine anorganische Säure mit verwendet werden. Beispiele für solche anorganische Säuren sind Chlorwasserstoff, Schwefelsäure und Phosphorsäure. Wasserfreier Chlorwasserstoff ist bevorzugt. Der Chlorwasserstoff kann durch geringe, z. B. 0,00001 bis 1 Gewichtsprozent, bezogen auf das Gewicht der umzuwandelnden Komponenten, betragende Menge von Wasser, die mit den Komponenten vermischt oder an der Aktivkohle adsorbiert sind, *in situ* durch Umsetzung dieses Wassers mit Verbindungen der allgemeinen Formel III oder IV erzeugt werden. Es kann aber auch Chlorwasserstoff durch das Gemisch der Reaktionsteilnehmer geleitet oder zugegeben werden.

Die Abtrennung der Aktivkohle kann durch alle dem Fachmann bekannten Verfahren erfolgen, beispielsweise durch Filtration. Vorzugsweise erfolgt die Behandlung mit Aktivkohle kontinuierlich in einer mit Aktivkohle gefüllten Reaktionskolonne, so dass eine separate Abtrennung nicht erforderlich ist.

Das in Kontakt bringen der Reaktionsmischung mit Wasser oder einer wässrigen Säure im zweiten Verfahrensschritt (b) (Hydrolyse) kann durch jede dem Fachmann bekannte Art erfolgen. Dies kann sowohl diskontinuierlich als auch kontinuierlich erfolgen. Das Gemisch aus der Aktivkohlebehandlung kann zusammen mit Wasser oder einer wässrigen Säure gerührt oder geschüttelt werden, um eine besonders gute Verteilung der Bestandteile eines solchen Gemisches zu gewährleisten.
Eine besonders bevorzugte Ausführungsform des erfindungsgemäßen Verfahrens ist das kontinuierliche in Kontakt bringen durch Durchleiten des Hydrolysegemisches durch ein Reaktionsrohr in dem ggf. auch statische Mischer vorhanden sein können. Besonders bevorzugt wird das Hydrolysegemisch in einem Loop-Reaktor mit Wasser oder einer wässrigen Säure in Kontakt gebracht, wobei ggf. die Vermischung noch durch statische Mischer verbessert werden kann.

Das Verhältnis von Hydrolysegemisch zu Wasser oder einer wässrigen Säure kann vom Fachmann gezielt mit Hinblick auf die gewünschten Eigenschaften des Endprodukts gewählt werden. Dabei muss die molare Menge an Wasser oder die molare Menge an Wasser, die in der der wässrigen Säure enthalten ist, ausreichen, um alle im Hydrolysegemisch vorhandenen hydrolysierbaren Gruppen X abzureagieren.
Als wässrige Säure kommen alle Lösungen von organischen oder anorganischen Säuren in Wasser in Betracht. Besonders bevorzugt handelt es sich bei wässriger Säure um Lösungen von Chlorwasserstoff oder Schwefelsäure in Wasser.
Über das Verhältnis von Hydrolysegemisch zu Wasser oder einer wässrigen Säure wird auch die Konzentration der Säure in der wässrigen Phase nach erfolgter Reaktion eingestellt. Die Konzentration der Säure liegt dabei bevorzugt in einem Bereich zwischen 1% und 40%, besonders bevorzugt in einem Bereich zwischen 5% und 25%.

Falls erwünscht, kann der zweite Schritt (b) des erfindungsgemäßen Verfahrens auch in Gegenwart eines gegenüber den Reaktionsteilnehmern inerten Lösungsmittels durchgeführt werden. Beispiele für solche Lösungsmittel sind bei Raumtemperatur (1013 mbar) flüssige Kohlenwasser- und Halogenkohlenwasserstoffe, wie Benzol, Toluol, Xylol, Methylenchlorid, Petrolether. Vorzugsweise wird kein zusätzliches Lösungsmittel verwendet.

Der zweite Schritt (b) des erfindungsgemäßen Verfahrens wird vorzugsweise beim Druck p' der umgebenden Atmosphäre, also bei p' = 1013 mbar durchgeführt. Falls erwünscht oder erforderlich, kann der Teilschritt b des erfindungsgemäßen Verfahrens jedoch auch bei höheren Drücken, z. B. 1013 mbar ≤ p' ≤ 5000 mbar, was z. B. schon durch den Druckaufbau in einem Loopreaktor der Fall sein kann, oder bei niedrigeren Drücken, z. B. 0,1 mbar ≤ p' ≤ 1013 mbar, was zur Einhaltung einer verhältnismäßig niedrigen Temperatur erwünscht sein kann, durchgeführt werden.

Vorzugsweise wird der zweite Schritt (b) des erfindungsgemäßen Verfahrens bei Temperaturen von 20 bis 200°C, insbesondere bei 20 - 100°C durchgeführt. Besonders bevorzugt liegt die Reaktionstemperatur in einem Bereich von 40 - 80°C.

Im zweiten Verfahrensschritt (b) kann die Verweildauer T' im Reaktionsbehälter dabei aus einem Bereich von 1 Sekunde ≤ T' ≤ 24 h gewählt werden. Vorzugsweise liegt die Verweildauer T' in einem Bereich von 10 Sekunden ≤ T' ≤ 120 Minuten, besonders bevorzugt in einem Bereich von 60 Sekunden ≤ T' ≤ 60 Minuten.

Die bei der Hydrolyse freiwerdende hydrolysierbare Gruppe X kann in ihrer dabei entstehenden protonierten Form HX entweder direkt gasförmig oder gelöst in einem Überschuss an Wasser abgetrennt werden. Die Abtrennung kann durch jede dem Fachmann bekannte Art erfolgen. Bevorzugt ist die Abtrennung in gelöster Form in Wasser. Besonders bevorzugt erfolgt die Abtrennung der Wasserphase von der Siloxanphase durch einfache Phasentrennung, die ggf. durch Koaleszer verbessert werden kann.
Die von der Siloxanphase abgetrennte wässrige Säure (HX in Wasser) kann anschließend wieder in die Hydrolyse, d.h. in den zweiten Verfahrensschritt (b) zurückgeführt werden.

Bei der Reaktion entstehende unerwünschte Verbindungen können durch alle dem Fachmann bekannten Verfahren bei Bedarf entfernt werden. So können niedermolekulare Verbindungen einfach durch thermische Abtrennung entfernt werden. Die thermische Abtrennung kann kontinuierlich oder diskontinuierlich erfolgen. Bevorzugt erfolgt diese Abtrennung kontinuierlich. Besonders bevorzugt erfolgt die kontinuierliche Abtrennung mittels eines Kurzweg- oder Dünnschichtverdampfers. Die notwendigen Abtrennbedingungen (Temperatur, Druck, Verweildauer) ergeben sich aus den Eigenschaften des gewünschten Zielprodukts. Soweit die abgetrennten Verbindungen Siloxane enthalten, die pro Molekül mindestens eine Struktureinheit der allgemeinen Formeln V und/oder VI enthalten, können diese als Rohstoff für die Mischung im ersten Verfahrensschritt (a) eingesetzt werden.

### Beispiel

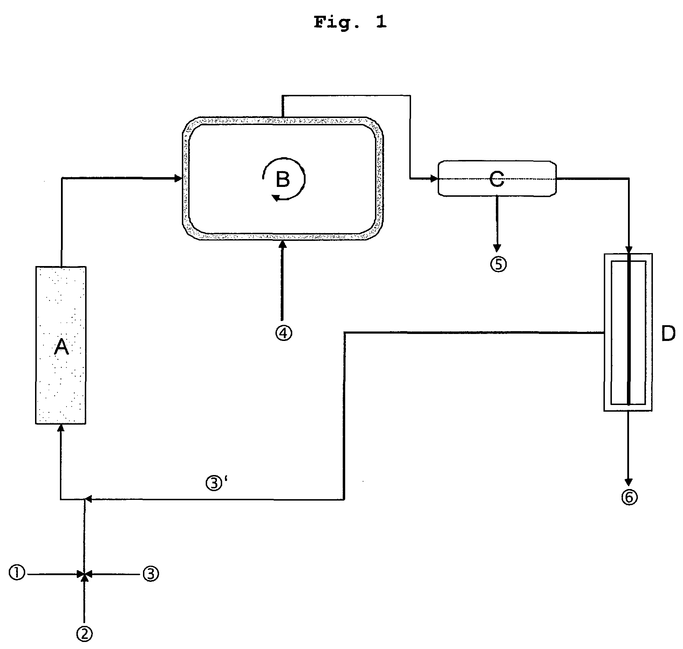

Die Anlage zur Herstellung des erfindungsgemäßen Organopolysiloxans besteht aus vier Teilstücken gemäß Fig. 1:
A mit 500 g Aktivkohle gefüllter Glaszylinder (V = 900 cm³) mit Doppelmantel. Der Außenmantel wird mit Hilfe eines Ölthermostaten auf 80°C thermostatisiert
B Loop-Reaktor (V = 1,4 L), über eine externe Kühlung auf < 50°C thermostatisiert mit eine Umwälzpumpe (800 L/h), die den Inhalt im Kreis pumpt. Die Reaktionsmischung aus A und Wasser **④** werden getrennt voneinander über Pumpen dosiert. Über einen Überlauf wird das zweiphasige Hydrolysegemisch abgenommen.
**C** Koaleszer mit Glaswollematten zur Verbesserung der Phasentrennung; die Siloxanoberphase wird zum Dünnschichtverdampfer D geleitet, die Sauerwasserphase **⑤** wird abgetrennt.
D Dünnschichtverdampfer (Verdampferfläche ca. 0,2 m², Oberflächentemperatur = 140 °C, Druck = 10 mbar, Dosierung ca. 0,7 L/h) mit Produktablauf **⑥** und Ablauf für die niedrig siedenden Polysiloxane **③'**

Gemäß Fig. 1 werden **①** (Dimethylvinylchlorsilan), **②** (eine Mischung aus 1,2-Bis-(dichlormethylsilyl)ethan und 1,2-Bis-(dichlormethylsilyl)ethen im Molverhältnis 5 zu 1) und **③** (1,3-Divinyl-1,1,3,3-tetramethyldisiloxan) im Massen-Verhältnis 2,3:1,0:4,2 gemischt. Sobald Destillat **③**' aus D zur Verfügung steht wird **③** durch dieses ersetzt.
Destillat **③**' besteht aus einer Mischung von Siloxanen 1, die Struktureinheiten der Formel V und VI enthalten, und Siloxan 2 aus Struktureinheiten der Formel VI im molaren Verhältnis Siloxan 1 : Siloxan 2 = 10 : 90 %.
Für Siloxane 1 gilt: Y = -CH₂CH₂- & -CH=CH- (im Verhältnis 5 : 1), a = 1, b = 1, c = 3, R = -CH₃, R¹ = -CH₃ & -CH=CH₂ (im Verhältnis 2 : 1).
Für Siloxan 2 gilt: [CH₂=CH-Si (CH₃)₂]₂O = 1,3-Divinyl-1,1,3,3-tetramethyldisiloxan.
Siloxane 1 haben Molmassen M_{w} (Gewichtsmittel) von 330 g/mol bis 518 g/mol und Siloxan 2 hat eine Molmasse M_{w} von 186 g/mol. Die Mischung wird mit einer Geschwindigkeit von 1 L/h durch den Kohleturm A gepumpt. Die daraus erhaltene Reaktionsmischung wird direkt in den Loopreaktor B dosiert. Gleichzeitig wird Wasser mit einer Geschwindigkeit von 1,2 L/h in den Reaktor codosiert.
Das zweiphasige Reaktionsgemisch wird über den Überlauf aus dem Loopreaktor in einen Koaleszer C geführt und die wässrige Phase abgetrennt.
Das rohe Siloxan wird anschließend im Dünnschichtverdampfer D von den flüchtigen Bestandteilen befreit, die wieder zur Herstellung der Ausgangsmischung herangezogen werden.

**Das erhaltene Polymer ⑥ weist folgende Eigenschaften auf**

| | |
|---|---|
| Viskosität | = 66 mm²/s bei 25°C |
| Jodzahl | = 141 |
| OH-Gehalt | = 0,8 % |
| Molmasse M_{w} | = 1500 g/mol |
| (Gewichtsmittel) | |

### Vergleichsversuch:

Ein Gemisch aus 256 g 1,2-Bis(methyldichlorsilyl)ethan und 578,4 g Vinyldimethylchlorsilan wird in einem 4 L-Dreihalskolben mit KPG-Rührer, Kühler, Thermometer, und 1 L-Tropftrichter unter Rühren zu 1400 g Wasser dosiert, so dass die Temperatur des Reaktionsgemisches 36°C nicht überschreitet. Danach wird 60 Minuten lang kräftig gerührt, anschließend in 20 Minuten die Phasen separiert. Die Siloxanphase wird zwei Mal mit je 1500 g Wasser gewaschen und man erhält 580 g des Rohprodukts.
Flüchtige Hydrolyseprodukte werden im Rotationsverdampfer unter Vakuum (10 mbar) bis 140°C Badtemperatur abgetrennt. Das Destillat (270 g = 47 % des Rohproduktes), bestehend aus einer Mischung aus 1,3-Divinyl-1,1,3,3-tetramethyldisiloxan und niederen Polymeren, die Struktureinheiten der allgemeinen Formel V enthalten, (im Verhältnis 90 : 10) wird verworfen.
Man erhält 310 g einer klaren Flüssigkeit als Reinprodukt.

| | |
|---|---|
| Viskosität | = 20 mm²/s bei 25°C |
| Jodzahl | = 160 |
| OH-Gehalt | = 0,1 % |

## Patentansprüche

1. Verfahren zur Herstellung von Organopolysiloxanen, die pro Molekül mindestens eine Struktureinheit der allgemeinen Formeln
O_{3-a/2}RₐSi-Y- (SiRₐO_{3-a/2})_{b} (I)
und
R¹_{c}SiO_{4-c} (II)
enthalten, **dadurch gekennzeichnet, dass**
(a) in einem ersten Schritt eine Mischung aus
Verbindungen der allgemeinen Formeln
X₃₋ₐRₐSi-Y-(SiRₐX₃₋ₐ)_{b} (III)
und
R¹_{c}SiX_{4-c} (IV)
und Siloxanen, die pro Molekül mindestens eine Struktureinheit ausgewählt aus der Gruppe enthaltend die allgemeinen Formeln
O_{3-1/2}RₐSi-Y- (SiRₐO_{3-a/2})_{b} (V)
und
R¹_{c}SiO_{4-c} (VI)
und deren Mischungen enthalten und die eine Molmasse (M_{w} Gewichtsmittel) von 100 bis 950 g/mol aufweisen,
mit einem Katalysator, vorzugsweise mit einem Katalysator mit einer im Wesentlichen sauren Oberfläche, in Kontakt gebracht wird und
(b) in einem zweiten Schritt
die daraus erhaltene Mischung mit Wasser oder einer wässrigen Säure umgesetzt wird,
wobei Organopolysiloxane erhalten werden, die pro Molekül mindestens eine Struktureinheit der Formeln (I) und (II) enthalten und eine Molmasse (M_{w} Gewichtsmittel) von 1000 bis 100 000 g/mol aufweisen,
wobei
R gleich oder verschieden sein kann und einen einwertigen SiC-gebundenen organischen Rest mit 1 bis 30 C-Atomen, der ein oder mehrere N und/oder O-Atome enthalten kann, bedeutet,
R¹ gleich oder verschieden sein kann und einen einwertigen SiC-gebundenen organischen Rest mit 1 bis 30 C-Atomen, der ein oder mehrere N und/oder O-Atome enthalten kann, bedeutet,
Y einen zwei- bis zwölfwertigen organischen Rest mit 1 bis 30 C-Atomen, der ein oder mehrere O-Atome enthalten kann, bedeutet,
X eine hydrolysierbare Gruppe bedeutet,
a 0 oder 1 ist,
b eine ganze Zahl von 1 bis 11 ist und
c 0, 1, 2 oder 3 ist,
mit der Maßgabe, dass als Siloxane, die pro Molekül mindestens eine Struktureinheit ausgewählt aus der Gruppe enthaltend die allgemeinen Formeln (V) und (VI) und deren Mischungen enthalten, Nebenprodukte eingesetzt werden, die neben den Organopolysiloxanen mit den Struktureinheiten (I) und (II) entstehen, von diesen abgetrennt werden und in das Verfahren rückgeführt werden.

2. Verfahren nach Anspruch 1, **dadurch gekennzeichnet, dass** b 1 ist und Y ein zweiwertiger Kohlenwasserstoffrest mit 2 bis 12 C-Atomen ist.

3. Verfahren nach Anspruch 1 oder 2, **dadurch gekennzeichnet, dass** als Siloxane, die Struktureinheiten der Formel (VI) enthalten, 1,3-Divinyl-1,1,3,3-tetramethyldisiloxan eingesetzt wird.

4. Verfahren nach einem der Ansprüche 1 bis 3, **dadurch gekennzeichnet, dass** als Katalysator Aktivkohle eingesetzt wird.

5. Verfahren nach einem der Ansprüche 1 bis 4, **dadurch gekennzeichnet, dass** X ein Halogen-, Säure- oder Alkoxyrest ist.

6. Verfahren nach einem der Ansprüche 1 bis 5, **dadurch gekennzeichnet, dass** das Verfahren kontinuierlich durchgeführt wird.

7. Verfahren nach einem der Ansprüche 1 bis 6, **dadurch gekennzeichnet, dass** der erste Verfahrensschritt (a) kontinuierlich in einer mit Aktivkohle gefüllten Reaktionskolonne durchgeführt wird.

8. Verfahren nach einem der Ansprüche 1 bis 7, **dadurch gekennzeichnet, dass** der zweite Verfahrensschritt (b) kontinuierlich in einem Loop-Reaktor durchgeführt wird.

## Claims

1. Method for producing organopolysiloxanes comprising per molecule at least one structural unit of general formulae
O_{3-a/2}RₐSi-Y- (SiRₐO_{3-a/2})_{b}, (I)
and
R¹_{c}SiO_{4-c} (II),
**characterized in that**
(a) in a first step a mixture of
compounds of general formulae
X₃₋ₐRₐSi-Y- (SiRₐX₃₋ₐ)_{b} (III)
and
R¹_{c}SiX_{4-c} (IV)
and siloxanes which comprise per molecule at least one structural unit selected from the group comprising general formulae
O_{3-a/2}RₐSi-Y- (SiRₐO_{3-a/2})_{b} (V)
and
R¹_{c}SiO_{4-c} (VI)
and mixtures thereof and which have a molar mass (M_{w} weight-average) of from 100 to 950 g/mol is contacted with a catalyst, preferably a catalyst having a substantially acidic surface, and
(b) in a second step
the mixture obtained therefrom is reacted with water or an aqueous acid
to obtain organopolysiloxanes which comprise per molecule at least one structural unit of formulae (I) and (II) and which have a molar mass (M_{w} weight-average) of from 1000 to 100 000 g/mol where
R may be identical or different and represents a monovalent SiC-bonded organic radical which comprises from 1 to 30 carbon atoms and which may comprise one or more nitrogen and/or oxygen atoms,
R¹ may be identical or different and represents a monovalent SiC-bonded organic radical which comprises from 1 to 30 carbon atoms and which may comprise one or more nitrogen and/or oxygen atoms,
Y represents a divalent to dodecavalent organic radical which comprises from 1 to 30 carbon atoms and which may comprise one or more oxygen atoms,
X represents a hydrolyzable group,
a is 0 or 1,
b is an integer of from 1 to 11 and
c is 0, 1, 2 or 3,
with the proviso that the siloxanes employed which comprise per molecule at least one structural unit selected from the group comprising general formulae (V) and (VI) and mixtures thereof are by-products which are formed in addition to the
organopolysiloxanes comprising the structural units (I) and (II), removed from said organopolysiloxanes comprising the structural units (I) and (II), and recycled into the method.

2. Method according to Claim 1, **characterized in that** b is 1 and Y is a divalent hydrocarbon radical comprising from 2 to 12 carbon atoms.

3. Method according to either of Claims 1 and 2, **characterized in that** 1,3-divinyl-1,1,3,3-tetramethyldisiloxane is employed as siloxanes comprising structural units of formula (VI).

4. Method according to any of Claims 1 to 3, **characterized in that** the catalyst employed is activated carbon.

5. Method according to any of Claims 1 to 4, **characterized in that** X is a halogen, acid or alkoxy radical.

6. Method according to any of Claims 1 to 5, **characterized in that** the method is carried out as a continuous operation.

7. Method according to any of Claims 1 to 6, **characterized in that** the first method step (a) is carried out as a continuous operation in a reaction column packed with activated carbon.

8. Method according to any of Claims 1 to 7, **characterized in that** the second method step (b) is carried out as a continuous operation in a loop reactor.

## Revendications

1. Procédé pour la préparation d'organopolysiloxanes qui contiennent par molécule au moins une unité structurale des formules générales
O_{3-a/2}RₐSi-Y-(SiRₐO_{3-a/2})_{b} (I)
et
R¹_{c}SiO_{4-c} (II)
**caractérisé en ce que**
(a) dans une première étape, on met en contact un mélange de composés des formules générales
X₃₋ₐRₐSi-Y-(SiRₐX₃₋ₐ)_{b} (III)
et
R¹_{c}SiX_{4-c} (IV)
et des siloxanes, qui contiennent par molécule au moins une unité structurale choisie dans le groupe contenant les formules générales
O_{3-a/2}RₐSi-Y-(SiRₐO_{3-a/2})_{b} (V)
et
R¹_{c}SiO_{4-c} (VI)
et leurs mélanges et qui présentent une masse molaire (M_{w} moyenne pondérale) de 100 à 950 g/mole, avec un catalyseur, de préférence avec un catalyseur présentant une surface essentiellement acide et
(b) dans une deuxième étape, on transforme le mélange ainsi obtenu avec de l'eau ou avec un acide aqueux,
des organopolysiloxanes étant obtenus, qui contiennent, par molécule, au moins une unité structurale des formules (I) et (II) et qui présentent une masse molaire (M_{w} moyenne pondérale) de 1000 à 100.000 g/mole, les radicaux R pouvant être identiques ou différents et signifiant un radical organique monovalent lié par SiC, comprenant 1 à 30 atomes de carbone, qui peut contenir un ou plusieurs atomes de N et/ou d'O,
les radicaux R¹ pouvant être identiques ou différents et signifiant un radical organique monovalent lié par SiC, comprenant 1 à 30 atomes de carbone, qui peut contenir un ou plusieurs atomes de N et/ou d'O,
Y signifiant un radical organique divalent à dodécavalent comprenant 1 à 30 atomes de carbone, qui peut contenir un ou plusieurs atomes d'O,
X signifiant un groupe hydrolysable,
a valant 0 ou 1,
b valant un nombre entier de 1 à 11 et
c valant 0, 1, 2 ou 3,
à condition qu'on utilise, comme siloxanes qui contiennent par molécule au moins une unité structurale choisie dans le groupe contenant les formules générales (V) et (VI) et leurs mélanges, des produits secondaires qui sont formés à côté des organopolysiloxanes présentant les unités structurales (I) et (II), qui sont séparés de ceux-ci et recyclés dans le procédé.

2. Procédé selon la revendication 1, **caractérisé en ce que** b vaut 1 et Y représente un radical hydrocarboné divalent comprenant 2 à 12 atomes de carbone.

3. Procédé selon la revendication 1 ou 2, **caractérisé en ce qu'**on utilise, comme siloxanes qui contiennent des unités structurales de formule (VI), du 1,3-divinyl-1,1,3,3-tétraméthyldisiloxane.

4. Procédé selon l'une quelconque des revendications 1 à 3, **caractérisé en ce qu'**on utilise, comme catalyseur, du charbon actif.

5. Procédé selon l'une quelconque des revendications 1 à 4, **caractérisé en ce que** X représente un radical halogène, acide ou alcoxy.

6. Procédé selon l'une quelconque des revendications 1 à 5, **caractérisé en ce que** le procédé est réalisé en continu.

7. Procédé selon l'une quelconque des revendications 1 à 6, **caractérisé en ce que** la première étape de procédé (a) est réalisée en continu dans une colonne de réaction remplie de charbon actif.

8. Procédé selon l'une quelconque des revendications 1 à 7, **caractérisé en ce que** la première étape de procédé (b) est réalisée en continu dans un réacteur à écoulement en boucle.
